# EUROPÄISCHE PATENTSCHRIFT

(11) **EP 0 541 557 B1**
(45) Veröffentlichungstag und Bekanntmachung des Hinweises auf die Patenterteilung: **24.08.1994**
(21) Anmeldenummer: 91910172.5
(22) Anmeldetag: 06.06.1991
(51) Int. Cl.: F16B 13/08

(54) **DÜBEL MIT SPREIZKÖRPER**
DOWEL WITH SPREADER
CHEVILLE AVEC ELEMENT D'EXPANSION

(30) Priorität: 27.07.1990 DE 4023891
(43) Veröffentlichungstag der Anmeldung: 19.05.1993
(73) Patentinhaber: Brauckmann & Pröbsting GmbH & Co. KG, D-58509 Lüdenscheid (DE)
(72) Erfinder: HASSLER, Erich, D-5880 Lüdenscheid (DE); LEITOLD, Manfred, D-5880 Lüdenscheid (DE)
(74) Vertreter: Patentanwälte Dipl.-Ing. Conrad Köchling Dipl.-Ing. Conrad-Joachim Köchling
(86) Internationale Anmeldenummer: DE9100486
(87) Internationale Veröffentlichungsnummer: WO9202734

(56) Entgegenhaltungen:
- EP-A- 0 327 437
- DE-A- 3 441 600
- DE-A- 3 809 403
- DE-U- 9 011 087
- FR-A- 2 264 214

## Beschreibung

Die Erfindung betrifft einen Dübel mit Spreizkörper, wobei der Spreizkörper den Schaft des Dübels teilweise umgibt und der Schaft nahe seines freien Endes mindestens teilweise im vom Spreizkörper umgebenen Bereich zum freien Ende hin sich keilförmig verbreitert.

Ein derartiger Dübel mit Spreizkörper ist beispielsweise aus der DE 38 09 403 A1 bekannt. Bei der bekannten Ausbildung ist ein solcher Dübel als Deckendübel beschrieben, wobei der Dübelkörper einen Kopf aufweist, der einen ringförmigen Durchbruch besitzt. Der Spreizkörper in Form einer geschlitzten Hülse muß durch den Kopf des Dübelkörpers hindurchgeschoben werden, wobei dann durch die am Eintreibende gelegene konische Aufweitung des Dübels eine Spreizung der Hülse in zwei einander entgegengesetzte Richtungen erfolgt.

Obwohl diese Ausbildung an sich brauchbar ist, ist daran nachteilig, daß die Herstellung äußerst kostenintensiv ist.

Die Ausbildung des ringförmigen Durchbruches am Kopf des Dübelkörpers macht zusätzliche Arbeitsgänge im Fertigungsverfahren erforderlich, die das Gesamtprodukt erheblich verteuern.

Ausgehend von diesem Stand der Technik liegt der Erfindung die Aufgabe zugrunde, einen Dübel mit Spreizkörper zu schaffen, bei dem ebenso wie im Stand der Technik unerwünschte Querkräfte vermieden werden und eine geringe Anzahl von Einzelteilen erforderlich ist, aber eine kostengünstige Fertigung ermöglicht wird.

Zur Lösung dieser Aufgabe wird vorgeschlagen, daß der Dübel aus einem Nagel gebildet ist, der an seinem dem Eintreibende abgewandten Ende T-förmig ausgebildet ist, daß der Spreizkörper durch ein U-förmiges Teil gebildet ist, welches auf den Nagel über dessen T-förmiges Ende aufschiebbar ist, wobei die Schenkel des U-förmigen Teiles durch die keilförmigen Verbreiterungen des Dübels entsprechend der Aufschubtiefe zunehmend aufspreizbar sind, daß die keilförmigen Verbreiterungen sich in einer zum Quersteg des T-förmigen Endes um 90° gedrehten Richtung erstrecken und daß die Schenkel des U-förmigen Teiles der Kontur des Schaftes folgend geformt ist.
Dadurch, daß der Dübel als Nagel ausgebildet ist und lediglich an seinem dem Eintreibende abgewandten Ende eine T-förmige Ausbildung aufweist, ist es möglich, über diesen Dübel als Spreizkörper ein U-förmiges Teil aufzuschieben, wobei der Halt des Dübels beim Eintreiben an der Außenkante des entsprechenden Bohrloches durch den Quersteg des T-förmig ausgebildeten Endes sichergestellt ist. Die Fertigung des Dübels ist äußerst einfach möglich, da das T-förmige Ende und die keilförmige Verbreiterung in äußerst einfacher und damit kostengünstiger Weise ausgebildet werden können. Auch der Spreizkörper ist ein einfaches Stanz-Biegeteil, wobei der Spreizkörper im einfachsten Fall aus einem ebenen Blechzuschnitt gebildet sein kann, der U-förmig gebogen wird. Infolge der Tatsache, daß der Dübel T-förmig ausgebildet ist, ist es möglich, den Spreizkörper auf den Dübel aufzuschieben, ohne daß dazu bisher im Stand der Technik nötige Ausnehmungen im Kopfbereich vorzusehen wären. Zum Einsetzen des Dübels mit Spreizkörper wird zunächst ein entsprechend großes Loch vorgebohrt, in welches der Dübel samt darauf befindlichem Spreizkörper eingeschoben wird. Der Spreizkörper befindet sich dabei in einer Stellung, in welcher dessen Enden noch nicht in dem Bereich liegen, der keilförmig verbreitert ist. Nachfolgend kann durch Schläge auf die Basis des U-förmigen Spreizkörpers der Spreizkörper weiter eingetrieben werden, wobei die Schenkel des Spreizkörpers an den keilförmigen Verbreiterungen am Dübelende aufgespreizt werden, so daß ein sicherer Sitz des Dübels im Bohrloch gewährleistet ist.
Mit dieser Ausbildung ist es möglich, beispielsweise Halterungen oder Bleche oder andere Gegenstände an Wänden oder Decken zu befestigen, wobei die entsprechenden zu befestigenden Gegenstände Durchtrittslochungen für den Dübelschaft und den Spreizkörper aufweisen müssen. Die Lagesicherung des entsprechenden zu befestigenden Elementes wird durch den Quersteg des T-förmigen Endes des Dübels gewährleistet.

Desweiteren ist bevorzugt vorgesehen, daß der Dübel im Schaftbereich bis zu der Verbreiterung kreisrunden Querschnitt aufweist.

Um schon vor der Montage des Dübels mit Spreizkörper eine Lagesicherung des Spreizkörpers am Dübel zu erreichen, ist vorzugsweise vorgesehen, daß über die Schenkel des Spreizkörpers eine gelochte Scheibe gesteckt ist, die sich an dem Quersteg des T-förmigen Endes des Dübels abstützt.

Durch diese Scheibe, die vergleichbar einer Unterlegscheibe ausgebildet ist, wird zudem eine gleichmäßige Pressung zwischen dem zu befestigenden Teil und dem Quersteg des Dübels erreicht, da zwischen diesen Teilen die entsprechende Scheibe angeordnet ist und somit eine gleichmäßige Lastverteilung erreicht wird.

Weiterhin ist bevorzugt, daß der Schaft des Dübels längs verlaufende Führungsrippen aufweist, an denen die Längsrandkanten der Schenkel des U-förmigen Teils geführt sind.

Durch diese Ausbildung wird erreicht, daß der Spreizkörper beim Eintreiben sich nicht relativ zum Dübel verdrehen kann, sondern lagerichtig und achsgerecht zu den keilförmigen Spreizflächen des Dübels hingeführt wird.

Ein Ausführungsbeispiel der Erfindung ist in der Zeichnung dargestellt und im folgenden näher beschrieben.
Es zeigt:
- Fig. 1: den Dübel mit Spreizkörper und Scheibe in Ansicht;
- Fig. 2: den Dübel und Spreizkörper in um 90° verdrehter Axiallage;
- Fig. 3: den Dübel und Spreizkörper von unten gesehen.

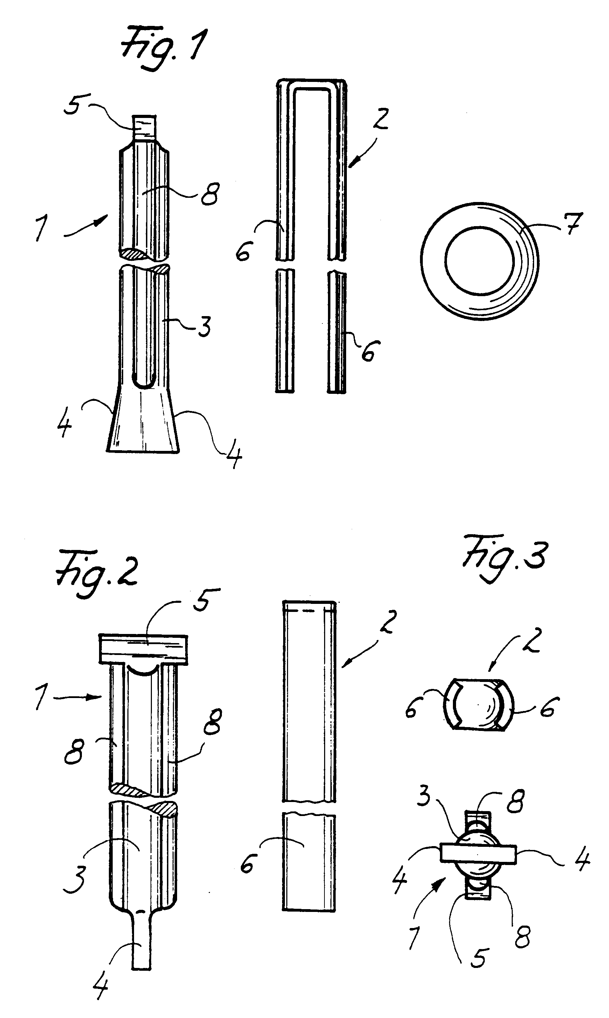

Die erfindungsgemäße Vorrichtung besteht im wesentlichen aus einem Dübel 1 und einem Spreizkörper 2. In der Sollage umgibt der Spreizkörper 2 den Schaft 3 des Dübels zumindest teilweise, wobei der Schaft 3 nahe seines freien Endes mindestens teilweise im vom Spreizkörper 2 umgebenen Bereich zum freien Ende hin sich keilförmig verbreitert. Die keilförmigen Verbreiterungen sind mit 4 bezeichnet. Der Dübel 1 ist aus einem Nagel gebildet, der an seinem dem Eintreibende abgewandten Ende T-förmig ausgebildet ist. Der Quersteg des T ist mit 5 bezeichnet. Der Spreizkörper 2 ist durch ein im wesentlichen U-förmiges Teil gebildet, welches auf den Dübel 1 über dessen T-förmiges Ende (5) aufschiebbar ist.

Dabei sind die Schenkel 6 des U-förmigen Teiles durch die keilförmigen Verbreiterungen 4 des Dübels 1 entsprechend der Aufschubtiefe zunehmend aufspreizbar, bis die Basis des U-förmigen Teiles an dem Quersteg 5 des T-förmigen Endes anliegt. Im Ausführungsbeispiel erstrecken sich die keilförmigen Verbreiterungen 4 in einer zum Quersteg 5 des T-förmigen Endes um 90° gedrehten Richtung.

Der Dübel 1 weist im Schaftbereich bis zur Verbreiterung 4 im wesentlichen kreisrunden Querschnitt auf. In der Sollmontagelage ist über die Schenkel 6 des Spreizkörpers 2 eine gelochte Scheibe 7 gesteckt, die sich an dem Quersteg 5 des T-förmigen Endes des Dübels 1 abstützt. Durch diese Anordnung sind die Teile 1,2 zueinander lagegesichert und montagegerecht gehaltert, wobei durch die Scheibe 7 noch zudem beim Eintreiben des Dübels und des Spreizkörpers eine gleichmäßige Lastverteilung im Bereich der Lochungsmündung erfolgt.

Bevorzugt weist der Schaft 3 des Dübels noch längsverlaufende Führungsrippen 8 auf, an denen die Längsrandkanten der Schenkel 6 des U-förmigen Teils (Spreizkörper 2) geführt sind. Diese Führungsrippen haben zudem noch den Vorteil, daß bei der Ausbildung der keilförmigen Verbreiterungen 4 des Dübels 1 geringfügig mehr Material zur Verfügung steht, so daß eine formfüllende Verpressung in einem einfachen Werkzeug zu der gewünschten Form der Verbreiterung führt.

## Patentansprüche

1. Dübel mit Spreizkörper, wobei der Spreizkörper den Schaft des Dübels teilweise umgibt und der Schaft nahe seines freien Endes mindestens teilweise im vom Spreizkörper umgebenen Bereich zum freien Ende hin sich keilförmig verbreitert, **dadurch gekennzeichnet**, daß der Dübel (1) aus einem Nagel gebildet ist, der an seinem dem Eintreibende abgewandten Ende T-förmig ausgebildet ist, daß der Spreizkörper (2) durch ein U-förmiges Teil gebildet ist, welches auf den Nagel über dessen T-förmiges Ende aufschiebbar ist, wobei die Schenkel (6) des U-förmigen Teiles durch die keilförmigen Verbreiterungen (4) des Dübels (1) entsprechend der Aufschubtiefe zunehmend aufspreizbar sind, daß die keilförmigen Verbreiterungen (4) sich in einer zum Quersteg (5) des T-förmigen Endes um 90° gedrehten Richtung erstrecken und daß die Schenkel (6) des U-förmigen Teiles der Kontur des Schaftes (3) folgend geformt sind.

2. Dübel mit Spreizkörper nach Anspruch 1, **dadurch gekennzeichnet**, daß der Dübel (1) im Schaftbereich bis zu der Verbreiterung (4) kreisrunden Querschnitt aufweist.

3. Dübel mit Spreizkörper nach Anspruch 1 oder 2, **dadurch gekennzeichnet**, daß über die Schenkel (6) des Spreizkörpers (2) eine gelochte Scheibe (7) gesteckt ist, die sich an dem Quersteg (5) des T-förmigen Endes des Dübels (1) abstützt.

4. Dübel mit Spreizkörper nach einem der Ansprüche 1 bis 3, **dadurch gekennzeichnet**, daß der Schaft (3) des Dübels (1) längsverlaufende Führungsrippen (8) aufweist, an denen die Längsrandkanten der Schenkel (6) des U-förmigen Teiles geführt sind.

## Claims

1. A plug having an expansion member, whereby the expansion member partially surrounds the shaft of the plug and close to its free end the shaft widens at least partially in a wedge shape towards the free end in the region surrounded by the plug,
**characterised in that** the plug (1) is formed from a nail, which at its end remote from the driven-in end is constructed in a T-shape,
**in that** the expansion member (2) is formed by a U-shaped part, which can be slid onto the nail over its T-shaped end, whereby the limbs (6) of the U-shaped part can be increasingly splayed by the wedge-shaped widened portions (4) of the plug (1) according to the slip-on depth,
**in that** the wedge-shaped widened portions (4) extend in a direction rotated by 90° to the crossbar (5) of the T-shaped end,
**and in that** the limbs (6) of the U-shaped part are formed according to the contours of the shaft (3).

2. A plug having an expansion member according to Claim 1,
**characterised in that** the plug (1) comprises a circular cross section in the shaft region to the widened portion (4).

3. A plug having an expansion member according to Claim 1 or 2,
**characterised in that** a perforated disc (7), which is supported on the crossbar (5) of the T-shaped end of the plug (1), is placed over the limbs (6) of the expansion member (2).

4. A plug having an expansion member according to one of Claims 1 to 3,
**characterised in that** the shaft (3) of the plug (1) comprises longitudinally extending guide ribs (8), on which the longitudinal edges of the limbs (6) of the U-shaped part are guided.

## Revendications

1. Cheville avec un élément écarteur, sachant que l'élément écarteur entoure partiellement la tige de la cheville et qu'à proximité de son extrémité la tige s'élargit de manière cunéiforme vers l'extrémité libre au moins dans la zone entourée par l'élément écarteur, caractérisée en ce que la cheville (1) est formée par un clou qui est réalisé en forme de T à son extrémité opposée à son extrémité d'enfoncement, en ce que l'élément écarteur (2) est formé par un élément en forme de U qui peut être enfilé sur l'extrémité en forme de T du clou, sachant que les branches (6) de la partie en forme de U peuvent être écartées progressivement par les élargissements cunéiformes (4) de la cheville (1) conformément à la profondeur d'enfoncement, en ce que les élargissements cunéiformes (4) s'étendent dans une direction tournée de 90° par rapport à l'entretoise (5) de l'extrémité en forme de T, et en ce que les branches (6) de la partie en forme de U sont réalisées en suivant le contour de la tige (3).

2. Cheville avec un élément écarteur selon la revendication 1, caractérisée en ce que la cheville (1) présente dans la zone de la tige une section transversale circulaire s'étendant jusqu'à l'élargissement (4).

3. Cheville avec un élément écarteur selon la revendication 1 ou 2, caractérisée en ce qu'un disque perforé (7) prenant appui sur l'entretoise (5) de l'extrémité en forme de T de la cheville (1) est enfilé sur les branches (6) du corps écarteur (2).

4. Cheville avec un élément écarteur selon l'une des revendications 1 à 3, caractérisée en ce que la tige (3) de la cheville (1) présente des cannelures de guidage (8) s'étendant longitudinalement, le long desquelles sont guidées les arêtes longitudinales du bord des branches (6) de la partie en forme de U.
